# EUROPÄISCHE PATENTSCHRIFT

(11) **EP 1 787 554 B1**
(45) Veröffentlichungstag und Bekanntmachung des Hinweises auf die Patenterteilung: **13.08.2014**
(21) Anmeldenummer: 06020763.6
(22) Anmeldetag: 02.10.2006
(51) Int. Cl.: A47J 31/44

(54) **Vorrichtung zur Zubereitung von Schaum**
Device for the preparation of foam
Dispositif pour émulsifier

(30) Priorität: 18.11.2005 DE 102005055124
(43) Veröffentlichungstag der Anmeldung: 23.05.2007
(73) Patentinhaber: Tchibo GmbH, 22297 Hamburg (DE)
(72) Erfinder: Balkau, Werner, 8762 Schwändi (CH); Ternité, Rüdiger, 21149 Hamburg (DE); Meyer-Ruhstrat, Hartwig, 21435 Stelle (DE)
(74) Vertreter: UEXKÜLL & STOLBERG

(56) Entgegenhaltungen:
- WO-A1-03/013325
- GB-A- 618 762

## Beschreibung

Die Erfindung betrifft eine Vorrichtung zur Zubereitung von Schaum, insbesondere zur Zubereitung von Milchschaum mittels von einer Haushalt-Kaffeemaschine abgegebenem Heißdampf.

Aus der DE 35 38 041 C2 ist eine Vorrichtung zum Erhitzen und Emulgieren von Milch bekannt, die insbesondere zum Zubereiten von Cappuccino benutzt werden kann. Diese Vorrichtung besitzt einen länglichen Düsenkörper mit einem hinteren Ende und einem vorderen Ende, der im Bereich seines hinteren Endes an eine Heißdampfquelle angeschlossen wird, wie in manchen Haushalt-Kaffeemaschinen eingebaut. Im Bereich des vorderen Endes des Düsenkörpers befindet sich eine Auslassdüse. Der Düsenkörper ist von einer Mantelhülse umgeben, die im Bereich ihres hinteren Endes eine Luftansaugöffnung und im Bereich ihres vorderen Endes eine Auslassöffnung aufweist, wobei zwischen dem Düsenkörper und der Mantelhülse ein Zwischenraum vorgesehen ist. Ferner hat die Mantelhülse im Bereich ihres vorderen Endes eine Flüssigkeitsansaugöffnung.

Um mit der vorbekannten Vorrichtung den Milchschaum für ein Cappuccino-Getränk zu erzeugen, wird die Vorrichtung mit ihrem vorderen Endbereich in ein Gefäß mit Milch eingetaucht, während Heißdampf von einer externen Quelle in den Düsenkörper geleitet wird. Wenn der Heißdampf am vorderen Ende des Düsenkörpers ausströmt, zieht er über einen Venturi-Effekt durch die Luftansaugöffnung und den Zwischenraum zwischen Mantelhülse und Düsenkörper strömende Luft mit, sodass in die Milch eine Mischung aus heißem Dampf und Luft eintritt, was eine Emulgierung und Auflockerung der Milch bewirkt. Ferner wird, ebenfalls durch einen Venturi-Effekt bedingt, durch die in die Milch eintauchende Flüssigkeitsansaugöffnung Milch durch den vorderen Bereich der Vorrichtung gefördert, was zu einer weiteren Verwirbelung und einer Verbesserung der Schaumbildung führt.

Eine ähnliche Vorrichtung ist aus der DE 88 06 220 U1 bekannt, bei der aber keine Flüssigkeitsansaugöffnung vorgesehen ist.

Eine Vorrichtung mit den Merkmalen des Oberbegriffs des Anspruchs 1 ist aus der GB 618 762 A bekannt.

Es ist Aufgabe der Erfindung, die vorbekannten Vorrichtungen zur Zubereitung von Schaum zu verbessern.

Diese Aufgabe wird gelöst durch eine Vorrichtung zur Zubereitung von Schaum, insbesondere zur Zubereitung von Milchschaum mittels von einer Haushalt-Kaffeemaschine abgegebenem Heißdampf, mit den Merkmalen des Anspruchs 1. Vorteilhafte Ausgestaltungen der Erfindung ergeben sich aus den Unteransprüchen.

Die erfindungsgemäße Vorrichtung besitzt einen länglichen Düsenkörper mit einem hinteren Ende und einem vorderen Ende, der im Bereich seines hinteren Endes an eine Heißdampfquelle anschließbar ist und der im Bereich seines vorderen Endes eine Auslassdüse aufweist. Den Düsenkörper umgibt eine Mantelhülse mit einem hinteren Ende und einem vorderen Ende, die im Bereich ihres hinteren Endes eine Luftansaugöffnung und im Bereich ihres vorderen Endes eine Auslassöffnung aufweist. Zwischen dem Düsenkörper und der Mantelhülse ist ein Zwischenraum ausgebildet. Die Mantelhülse ist zumindest im Bereich ihres hinteren Endes von einer Außenhülse umgeben. Die Außenhülse ist in Bezug auf die Mantelhülse verstellbar, z.B. verschiebbar und/oder verdrehbar, wobei die wirksame Größe der Luftansaugöffnung durch Verstellung der Außenhülse einstellbar ist.

Die erfindungsgemäß vorgesehene Außenhülse verbessert einerseits das Design der Vorrichtung und stellt eine zusätzliche Wärmeisolierung für den von Heißdampf durchströmten Düsenkörper dar und eröffnet andererseits die Möglichkeit, die wirksame Größe der Luftansaugöffnung zu verstellen. Durch Einstellen der wirksamen Größe der Luftansaugöffnung lässt sich die Schaumbildung optimieren und an die Wünsche des Anwenders und die Eigenschaften der gerade benutzten Milch anpassen.

Bei einer bevorzugten Ausführungsform durchdringt die Luftansaugöffnung beabstandet zum hinteren Ende der Mantelhülse die Mantelhülse und ist über einen Kanal an der Außenseite der Mantelhülse bis zu einem Anschlag am hinteren Ende der Mantelhülse geführt. Vorzugsweise ist der Anschlag als nach außen vorspringender Ring gestaltet, der am hinteren Ende des Kanals eine Aussparung aufweist. Bei einer derartigen Gestaltung ist die eigentliche Öffnung der Mantelhülse unauffällig hinter der Außenhülse verborgen, aber durch Verschieben der Außenhülse lässt sich ein mehr oder weniger großer Teil des Kanals exponieren, sodass die wirksame Größe der Luftansaugöffnung über den Strömungswiderstand in dem von der Außenhülse abgedeckten Teil des Kanals problemlos eingestellt werden kann. Es ist auch denkbar, den Kanal konisch oder allgemeiner mit nicht konstantem Querschnitt zu gestalten (d.h. die Seitenwände des Kanals laufen nicht parallel zueinander und/oder der Boden des Kanals verläuft nicht parallel zu der Außenhülse), sodass bei Verschiebung der Außenhülse die wirksame Größe der Luftansaugöffnung in einem relativ großen Bereich einstellbar ist.

Vorzugsweise ist zwischen der Mantelhülse und der Außenhülse mindestens ein O-Ring angeordnet, z.B. im Bereich des hinteren Endes der Mantelhülse. Derartige O-Ringe können zum Arretieren der Außenhülse dienen, aber auch zum Abdichten, um das undefinierte Ansaugen von Falschluft über die Außenhülse zu verhindern. Bei Bedarf lässt sich die Außenhülse ganz von der Vorrichtung abziehen, z.B. für Reinigungszwecke.

Es ist auch denkbar, die Außenhülse über ein Schraubgewinde in Längsrichtung verstellbar an der Mantelhülse zu führen, sodass durch eine Drehbewegung eine Verschiebung der Außenhülse in Längsrichtung der Vorrichtung bewirkt wird.

Bei einer bevorzugten Ausführungsform der Erfindung weist die Mantelhülse im Bereich ihres vorderen Endes mindestens eine Flüssigkeitsansaugöffnung auf, wie im Prinzip aus der DE 35 38 041 C2 bekannt. Um die Variationsmöglichkeiten bei der Zubereitung von Milchschaum zu verbessern, ist bei einer vorteilhaften Ausgestaltung die wirksame Größe der Flüssigkeitsansaugöffnung durch Verstellung der Außenhülse einstellbar. Dabei ist es denkbar, dass die Einstellung der wirksamen Größe der Luftansaugöffnung und die Einstellung der wirksamen Größe der Flüssigkeitsansaugöffnung miteinander gekoppelt sind. Dies lässt sich z.B. durch eine Öffnung an der Außenhülse erreichen, die im Bereich der Flüssigkeitsansaugöffnung angeordnet ist und beim Verschieben oder Verdrehen der Außenhülse in Abstimmung auf die dabei erfolgte Änderung der wirksamen Größe der Luftansaugöffnung einen mehr oder weniger großen Teil der Flüssigkeitsansaugöffnung freigibt. Auf diese Weise wird werkseitig ein Zusammenhang zwischen den wirksamen Größen der Luftansaugöffnung und der Flüssigkeitsansaugöffnung vorgegeben, sodass der Benutzer zwar weniger freie Einstellmöglichkeiten hat, dafür die Vorrichtung aber auf die zu erwartenden üblichen Bedingungen weitgehend vorgerüstet und daher einfacher zu bedienen ist.

Im Folgenden wird die Erfindung anhand eines Ausführungsbeispiels weiter erläutert. Die Zeichnungen zeigen in
- Figur 1: eine Explosionsansicht einer Ausführungsform der erfindungsgemäßen Vorrichtung zur Zubereitung von Schaum,
- Figur 2: eine Detailvergrößerung aus Figur 1,
- Figur 3: eine Seitenansicht der zusammengesetzten Vorrichtung gemäß Figur 1 und
- Figur 4: einen Längsschnitt durch die zusammengesetzte Vorrichtung gemäß Figur 1.

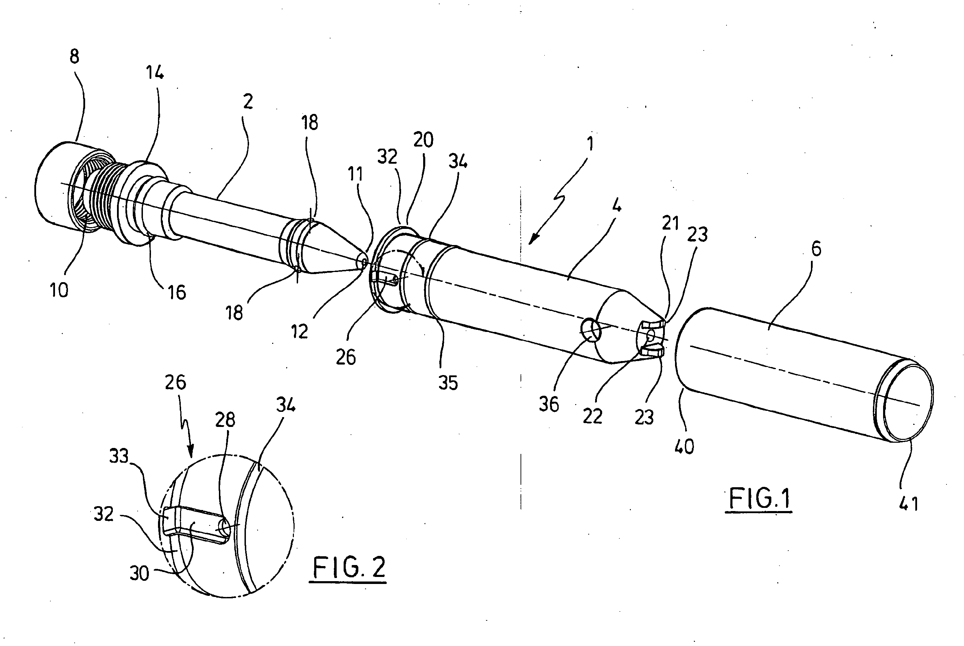

In Figur 1 sind die Einzelteile einer Ausführungsform einer Vorrichtung 1 zur Zubereitung von Schaum anhand einer Explosionsansicht veranschaulicht.

Die Vorrichtung 1 weist einen Düsenkörper 2, eine Mantelhülse 4 und eine Außenhülse 6 auf. Eine Verschraubung 8 befindet sich am hinteren Ende 10 des Düsenkörpers 2 und dient zum Anschluss z.B. eines Rohres, um die Vorrichtung 1 mit einer Heißdampfquelle zu verbinden. Eine derartige Heißdampfquelle ist z.B. ein Bestandteil mancher Kaffeemaschinen.

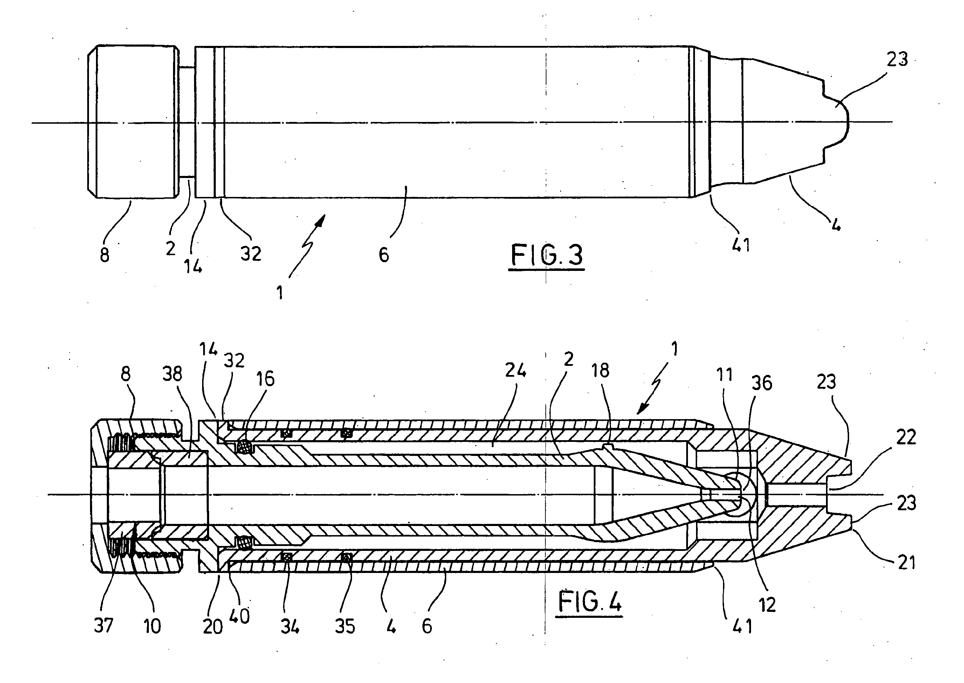

Wie insbesondere anhand der Figuren 1 und 4 ersichtlich, befindet sich am vorderen Ende 11 des Düsenkörpers 2 eine Auslassdüse 12. In der Nähe seines hinteren Endes 10 ist der Düsenkörper 2 mit einer umlaufenden Schulter 14 versehen. Nicht weit davon entfernt ist in einer Nut an der Außenseite des Düsenkörpers 2 ein O-Ring 16 angeordnet, der etwas über die Außenfläche des Düsenkörpers 2 vorsteht. Im vorderen Bereich gehen von dem Düsenkörper 2 drei gleichmäßig über den Umfang verteilte Vorsprünge 18 aus.

Der O-Ring 16 und die Vorsprünge 18 dienen zur Arretierung und Führung der Mantelhülse 4, die im zusammengesetzten Zustand gemäß den Figuren 3 und 4 mit ihrem hinteren Ende 20 an der Schulter 14 des Düsenkörpers 2 anliegt. Dabei wird der O-Ring 16 etwas zusammengedrückt und sorgt für Reibungskräfte, die die Mantelhülse 4 an dem Düsenkörper 2 halten. Ferner wirkt der O-Ring 16 als Dichtung.

An ihrem vorderen Ende 21 ist die Mantelhülse 4 mit einer Auslassöffnung 22 versehen, die sich in Form eines Kanals durch einen konisch zulaufenden vorderen Endbereich der Mantelhülse 4 erstreckt und zwischen zwei Vorsprüngen 23 mündet. Zwischen dem Düsenkörper 2 und der Mantelhülse 4 ist ein Zwischenraum 24 ausgebildet.

Im hinteren Endbereich der Mantelhülse 4 befindet sich eine Luftansaugöffnung 26, siehe Figur 1, die in Figur 2 in vergrößerter Ansicht gezeigt ist. Die Luftansaugöffnung 26 weist eine Bohrung 28 auf, die durch die Wandung der Mantelhülse 4 hindurchtritt und einen Zugang zu dem Zwischenraum 24 bereitstellt. Von der Bohrung 28 geht ein als Längsnut 30 gestalteter Kanal in der Wandung der Mantelhülse 4 aus, der sich nach hinten bis zu einem ringartig nach außen vorspringenden Anschlag 32 erstreckt. Der Anschlag 32 ist am Ende der Längsnut 30 mit einer Aussparung 33 versehen, siehe Figur 2.

Im hinteren Bereich der Mantelhülse 4 befinden sich zwei auf Abstand angeordnete O-Ringe 34 und 35, die in periphere Nuten eingelassen sind und geringfügig über die Außenfläche der Mantelhülse 4 vorstehen. Die O-Ringe 34 und 35 dienen zur Arretierung der Außenhülse 6 und als Dichtung.

In der Nähe ihres vorderen Endes 21 ist die Mantelhülse 4 mit einer Flüssigkeitsansaugöffnung 36 versehen, siehe Figur 1 und Figur 4.

In den Darstellungen gemäß Figur 3 und Figur 4 ist die Außenhülse 6 ganz auf die Mantelhülse 4 aufgeschoben, wobei das hintere Ende 40 der Außenhülse 6 an dem Anschlag 32 der Mantelhülse 4 anliegt. Das vordere Ende 41 der Außenhülse 6 liegt dabei hinter der Flüssigkeitsansaugöffnung 36. In diesem Zustand wird die Außenhülse 6 von den beiden O-Ringen 34 und 35 festgehalten.

In dem in Figur 4 dargestellten Zustand kann über die Aussparung 33, die Längsnut 30 und die Bohrung 28 Luft durch die Luftansaugöffnung 26 in den Zwischenraum 24 eintreten. Die wirksame Größe der Luftansaugöffnung 26 ist dabei minimal. Um die wirksame Größe der Luftansaugöffnung 26 zu erhöhen, kann man die Außenhülse 6 etwas vorziehen. Dadurch wird die hintere Zone der Längsnut 30 exponiert, sodass nur noch die vordere Zone der Längsnut 30 durch die Außenhülse 6 geschlossen ist und als Strömungskanal wirkt; der Strömungswiderstand der Luftansaugöffnung 26 ist in diesem Zustand kleiner als in dem in Figur 4 dargestellten Zustand, in dem die Längsnut 30 über ihre Gesamtlänge durch die Außenhülse 6 nach außen geschlossen ist. Durch Verschieben der Außenhülse 6 entlang der Mantelhülse 4 lässt sich also der Strömungswiderstand bzw. die wirksame Größe der Luftansaugöffnung 26 einstellen.

Um mit der Vorrichtung 1 Milchschaum zuzubereiten, z.B. als Schaumkrone für Cappuccino, wird die Vorrichtung 1 mittels der Verschraubung 8 mit einer Heißdampfquelle verbunden. Im Ausführungsbeispiel ist die Heißdampfquelle in eine Kaffeemaschine integriert und führt zu einem Stutzen, über den die Verschraubung 8 geschoben wird. Beim Festdrehen der Verschraubung 8 drückt ein Quetschring 37 auf einen Dichtungsring 38 aus einem Elastomer, um die Verbindung abzudichten. Wenn nun die Heißdampfquelle eingeschaltet ist, durchströmt der davon erzeugte Heißdampf den Düsenkörper 2 über die gesamte Länge und tritt an der Auslassdüse 12 aus, von wo der Heißdampf durch die Auslassöffnung 22 in der Mantelhülse 4 nach außen gelangt. Dabei hält der Benutzer die Vorrichtung 1 mit ihrem vorderen Bereich in ein Gefäß mit Milch, sodass der Heißdampf durch die Milch sprudelt und wegen seiner hohen Temperatur die Milch emulgiert. Die Vorsprünge 23 verhindern, dass die Auslassöffnung 22 z.B. durch den Gefäßboden geschlossen wird.

Die Strömungsverhältnisse in der Vorrichtung 1 bewirken einen Unterdruck in dem Zwischenraum 24, wenn der Heißdampf die Auslassdüse 12 des Düsenkörpers 2 verlässt. Dadurch wird über die Luftansaugöffnung 26 Luft in den Zwischenraum 24 eingesaugt, die sich mit dem Heißdampf vermischt und zusammen mit dem Heißdampf an der Auslassöffnung 22 austritt. Dies verbessert die Schaumbildung. Der Benutzer kann durch Verschieben der Außenhülse 6 entlang der Mantelhülse 4 die pro Zeiteinheit angesaugte Luftmenge regulieren.

Ferner haben die Strömungsverhältnisse innerhalb der Vorrichtung 1 einen Unterdruck hinter der Flüssigkeitsansaugöffnung 36 zur Folge, sodass Milch in den vorderen Bereich des Zwischenraums 24 eingesogen, mit dem Heißdampf und der angesaugten Luft verwirbelt und durch die Auslassöffnung 22 wieder ausgestoßen wird. Die Schaumbildung ist dadurch sehr effizient.

## Patentansprüche

1. Vorrichtung zur Zubereitung von Schaum, insbesondere zur Zubereitung von Milchschaum mittels von einer Haushalt-Kaffeemaschine abgegebenem Heißdampf,
- mit einem länglichen Düsenkörper (2) mit einem hinteren Ende (10) und einem vorderen Ende (11), der im Bereich seines hinteren Endes (10) an eine Heißdampfquelle anschließbar ist und der im Bereich seines vorderen Endes (11) eine Auslassdüse (12) aufweist,
- mit einer Mantelhülse (4) mit einem hinteren Ende (20) und einem vorderen Ende (21), die den Düsenkörper (2) umgibt und im Bereich ihres hinteren Endes (20) eine Luftansaugöffnung (26) und im Bereich ihres vorderen Endes (21) eine Auslassöffnung (22) aufweist, wobei zwischen dem Düsenkörper (2) und der Mantelhülse (4) ein Zwischenraum (24) ausgebildet ist, und
- mit einer Außenhülse (6), die die Mantelhülse (4) zumindest im Bereich des hinteren Endes (20) der Mantelhülse (4) umgibt,
**dadurch gekennzeichnet, dass** die Außenhülse (6) in Bezug auf die Mantelhülse (4) verstellbar ist, vorzugsweise verschiebbar und/oder verdrehbar, wobei die wirksame Größe der Luftansaugöffnung (26) durch Verstellung der Außenhülse (6) einstellbar ist.

2. Vorrichtung nach Anspruch 1, **dadurch gekennzeichnet, dass** die Luftansaugöffnung (26) beabstandet zum hinteren Ende (20) der Mantelhülse (4) die Mantelhülse (4) durchdringt und über einen Kanal, vorzugsweise eine Längsnut (30), an der Außenseite der Mantelhülse (4) bis zu einem Anschlag (32) am hinteren Ende (20) der Mantelhülse (4) geführt ist.

3. Vorrichtung nach Anspruch 2, **dadurch gekennzeichnet, dass** der Anschlag (32) als nach außen vorspringender Ring gestaltet ist, der am hinteren Ende des Kanals (30) eine Aussparung (33) aufweist.

4. Vorrichtung nach einem der Ansprüche 1 bis 3, **dadurch gekennzeichnet, dass** zwischen der Mantelhülse (4) und der Außenhülse (6) mindestens ein O-Ring (34, 35) angeordnet ist, vorzugsweise im Bereich des hinteren Endes (20) der Mantelhülse (4).

5. Vorrichtung nach einem der Ansprüche 1 bis 4, **dadurch gekennzeichnet, dass** die Außenhülse über ein Schraubgewinde in Längsrichtung verstellbar an der Mantelhülse geführt ist.

6. Vorrichtung nach einem der Ansprüche 1 bis 5, **dadurch gekennzeichnet, dass** die Mantelhülse (4) im Bereich ihres vorderen Endes (21) mindestens eine Flüssigkeitsansaugöffnung (36) aufweist.

7. Vorrichtung nach Anspruch 6, **dadurch gekennzeichnet, dass** die wirksame Größe der Flüssigkeitsansaugöffnung durch Verstellung der Außenhülse einstellbar ist.

8. Vorrichtung nach Anspruch 7, **dadurch gekennzeichnet, dass** die Einstellung der wirksamen Größe der Luftansaugöffnung und die Einstellung der wirksamen Größe der Flüssigkeitsansaugöffnung miteinander gekoppelt sind.

## Claims

1. Device for preparing froth, in particular for preparing milk froth by means of hot steam output by a domestic coffee machine,
- with an elongate nozzle body (2) having a rear end (10) and a front end (11), which can be connected in the region of its rear end (10) to a hot steam source and which has an outlet nozzle (12) in the region of its front end (11),
- with a casing sleeve (4) having a rear end (20) and a front end (21), which surrounds the nozzle body (2) and has an air intake opening (26) in the region of its rear end (20) and an outlet opening (22) in the region of its front end (21), an intermediate space (24) being formed between the nozzle body (2) and the casing sleeve (4), and
- with an outer sleeve (6) which surrounds the casing sleeve (4) at least in the region of the rear end (20) of the casing sleeve (4), **characterized in that** the outer sleeve (6) is adjustable, preferably displaceable and/or rotatable, with respect to the casing sleeve (4), with the effective size of the air intake opening (26) being able to be set by adjusting the outer sleeve (6).

2. Device according to Claim 1, **characterized in that** the air intake opening (26) penetrates the casing sleeve (4) at a distance from the rear end (20) of the casing sleeve (4) and is guided via a channel, preferably a longitudinal groove (30), on the outside of the casing sleeve (4) as far as a stop (32) at the rear end (20) of the casing sleeve (4).

3. Device according to Claim 2, **characterized in that** the stop (32) is designed as an outwardly projecting ring which has a cutout (33) at the rear end of the channel (30).

4. Device according to one of Claims 1 to 3, **characterized in that** at least one O-ring (34, 35) is arranged between the casing sleeve (4) and the outer sleeve (6), preferably in the region of the rear end (20) of the casing sleeve (4).

5. Device according to one of Claims 1 to 4, **characterized in that** the outer sleeve is guided adjustably in the longitudinal direction on the casing sleeve via a screw thread.

6. Device according to one of Claims 1 to 5, **characterized in that** the casing sleeve (4) has at least one liquid intake opening (36) in the region of its front end (21).

7. Device according to Claim 6, **characterized in that** the effective size of the liquid intake opening can be set by adjusting the outer sleeve.

8. Device according to Claim 7, **characterized in that** the setting of the effective size of the air intake opening and the setting of the effective size of the liquid intake opening are coupled to each other.

## Revendications

1. Dispositif de préparation de mousse, en particulier pour la préparation de mousse de lait à l'aide de vapeur surchauffée délivrée par une machine à café domestique,
- comprenant un corps de buse (2) allongé, doté d'une extrémité arrière (10) et d'une extrémité avant (11), qui, dans la région de son extrémité arrière (10), peut être raccordé à une source de vapeur surchauffée et qui présente une buse de sortie (12) dans la région de son extrémité avant (11),
- comprenant un fourreau (4), doté d'une extrémité arrière (20) et d'une extrémité avant (21), qui entoure le corps de buse (2) et, dans la région de son extrémité arrière (20), présente un orifice d'aspiration d'air (26) et, dans la région de son extrémité avant (21), un orifice de sortie (22), un espace (24) étant formé entre le corps de buse (2) et le fourreau (4), et
- comprenant une douille extérieure (6) qui entoure le fourreau (4) au moins dans la région de l'extrémité arrière (20) du fourreau (4),
**caractérisé en ce que** la douille extérieure (6) peut être déplacée, de préférence coulissée et/ou tournée, par rapport au fourreau (4), la dimension active de l'orifice d'aspiration d'air (26) pouvant être réglée par déplacement de la douille extérieure (6).

2. Dispositif selon la revendication 1, **caractérisé en ce que** l'orifice d'aspiration d'air (26) traverse le fourreau (4), à distance de l'extrémité arrière (20) du fourreau (4), et est guidé par un canal, de préférence une rainure longitudinale (30), sur la face externe du fourreau (4), jusqu'à une butée (32) sur l'extrémité arrière (20) du fourreau (4).

3. Dispositif selon la revendication 2, **caractérisé en ce que** la butée (32) est réalisée sous la forme d'une bague qui fait saillie vers l'extérieur et présente un évidement (33) à l'extrémité arrière du canal (30).

4. Dispositif selon l'une des revendications 1 à 3, **caractérisé en ce qu'**au moins un joint torique (34, 35) est disposé entre le fourreau (4) et la douille extérieure (6), de préférence dans la région de l'extrémité arrière (20) du fourreau (4).

5. Dispositif selon l'une des revendications 1 à 4, **caractérisé en ce que** la douille extérieure est guidée sur le fourreau par l'intermédiaire d'un filetage, avec possibilité de déplacement dans le sens longitudinal.

6. Dispositif selon l'une des revendications 1 à 5, **caractérisé en ce que** le fourreau (4) présente au moins un orifice d'aspiration de liquide (36) dans la région de son extrémité avant (21).

7. Dispositif selon la revendication 6, **caractérisé en ce que** la dimension active de l'orifice d'aspiration de liquide peut être réglée en déplaçant la douille extérieure.

8. Dispositif selon la revendication 7, **caractérisé en ce que** le réglage de la dimension active de l'orifice d'aspiration d'air et le réglage de la dimension active de l'orifice d'aspiration de liquide sont couplés entre eux.
